# EUROPEAN PATENT APPLICATION

(11) **EP 2 933 696 A1**
(43) Date of publication of application: **21.10.2015**
(21) Application number: 14164952.5
(22) Date of filing: 16.04.2014
(51) Int. Cl.: G05B 19/042, G05B 19/418

(54) **Mobile human machine interface for control devices**

(71) Applicant: ABB Technology AG, 8050 Zürich (CH)
(72) Inventor: Ferranti, Ettore, 8165 Schleinikon (CH); Naedele, Martin, 8050 Zürich (CH)
(74) Representative: ABB Patent Attorneys

(57) **Abstract**

The present invention is concerned with a mobile Human Machine Interface HMI device wirelessly connected to Intelligent Electronic Devices IEDs and a system server. The mobile HMI acts as a single point of access for a human engineer or operator and constitutes a flexible platform for controlled exchange of local IED information and central system information. The human thus has real-time access to both local process data and central configuration or expert data. New value adding services supporting the human are enabled, such as interactive chat, audio, or video conferencing with a support expert at the system server location.

## Description

### FIELD OF THE INVENTION

The invention relates to the field of automation of industrial processes or substations with a plurality of process or substation control devices. Specifically, it relates to a method of configuring or servicing the control devices.

### BACKGROUND OF THE INVENTION

A power distribution system is the interface between the power transmission network and the electricity end-customers and comprises a number of primary substations with transformers that reduce the voltage from an HV level of a transmission grid down to MV levels suitable for regional power distribution. System operation involves secondary devices interacting with primary equipment of the substations and power lines such as switches, tap changers, capacitor banks and the like. A Substation Automation (SA) system responsible for controlling, protecting, measuring and monitoring comprises the secondary devices interconnected in a SA communication network and interacting with the primary devices via a process interface.

In automated power transmission and distribution systems, the secondary devices comprise microprocessor-based programmable electronic devices or digital relays, also termed Intelligent Electronic Devices (IED), that are capable of sending control signals to switching devices. Most digital relays in use today combine protection, control, monitoring, communication, power quality monitoring, and metering capabilities. The protection functions supported by a digital relay may include time delay and instantaneous over-current functions for phase and ground elements, sequence directional over-current functions, reclosing functions, over- and under-frequency protection functions, and over- and undervoltage protection functions. Digital relay devices also support various metering functions; monitoring of voltage sags, swells, and interruptions; fault location algorithms; and oscillographic record storage. The IEDs have a dedicated local Human Machine Interface (HMI) per device, mounted on a front panel the device or on a cabinet containing the device. The IEDs are configured locally using the local HMI or remotely using a settings software tool. In many cases the required protection functionality is preloaded into the relay device, and later enabled and parameterised with a configuration tool connected to the relay device.

Patent application US 2009/0210197 discloses a meter and assigned data logger connected to a data collector via communication network, i.e. either a common cable or a mobile/wireless network. The data collector is immobile and the individual communication paths via the network are permanent. The data collector is linked to data storage module through a communication network that may be wireless and use GSM. While incoming power consumption data from the various data loggers is permanently stored and analyzed at the data storage module, the latter does not provide any analysis result or other feedback to the data logger or data collector.

Patent application US 2013/0314246 discloses an IED with a sensor coupled to an electrical circuit of a power distribution network for measuring a power parameter e.g. voltage, of the electrical circuit. A processor detects an event and retrieves a digital file associated with the detected event from a removable memory of the IED or from a remote event server, based on an event code transmitted to the server when the event occurs. A display of the IED, e.g. LCD or touch screen, receives a digital file from the processor and plays the retrieved digital file to provide graphic indication of the event detected by the processor, including visual and audible trouble shooting instructions. The communication with the remote server is also used to provide IED firmware updates so as to upgrade operating instructions or program code.

Configuring or servicing, including maintenance and troubleshooting activity, the IEDs via local displays requires a human to physically approach each IED individually, which is impractical in case of a large industrial plant or substation with hundreds of IEDs.

### DESCRIPTION OF THE INVENTION

It is therefore an objective of the invention to increase flexibility in accessing a plurality of Intelligent Electronic Devices IEDs at a site of an industrial plant or substation for configuration or servicing purposes. This objective is achieved by an automation system according to the independent claim. Preferred embodiments are evident from the dependent patent claims.

According to the invention, a mobile Human Machine Interface HMI device wirelessly connected to the IEDs and a system server acts as a single point of access for a human engineer or operator and constitutes a flexible platform or interface for exchange, under control/supervision of the human, of local IED information and central system information. The human thus has real-time access to both local process data and central configuration or expert data. The mobile HMI for automation devices with a wireless communication infrastructure constitutes a flexible information presentation and communication system. Sharing of a single mobile HMI among peer IEDs supplants the need for dedicated local HMIs including display units permanently connected to the IEDs and results in cost savings. New value adding services supporting the human are enabled, such as interactive chat, audio, or video conferencing with a support expert at the system server location. To this end the system server may be a remote collaboration tool running a service support application configured to accept input from a human expert as server response data. More and new types of information may be provided to the personnel configuring or servicing automation devices, which ultimately speeds up maintenance response, reduces errors, and reduces the amount of equipment required.

Specifically, an industrial or substation automation system for monitoring, controlling, and/or protecting of primary equipment of an industrial plant or a substation comprises
- an IED adapted to exchange IED data, i.e. to transmit IED source data and receive IED destination data, via a first, short-range wireless communication channel,
- a system server adapted to exchange, i.e. to transmit and receive server data via a second, extended range wireless communication channel, and
- a mobile HMI device such as a laptop or tablet computer or a smartphone adapted to communicate, via the first and second wireless communication channel, with the IED and with the system server, respectively, and running, or executing, an IED application, or function, configured to display configuration or operational IED source data and to accept configuration or command IED destination data from the human engineer or operator, and running a server application configured to display server data including documentation or interactive support information.

In a preferred variant of the invention the server application is configured to accept server request data input by a human, or provided in an automated manner by the IED application, and to display server response data responsive to the server request data. The requested information from the system server thus is synchronized with IED source data at all times.

In a first advantageous embodiment, the server response data is prohibited, or excluded, from being provided automatically, i.e. without manual intervention such as re-typing passwords or copying setting groups, to the IED application. A strict separation, possibly including application level separation, operating system level partitioning or even different processors, between the IED application and the server application on the mobile HMI precludes any unwanted remote control of the IED from the server, and thus amply responds to cyber security concerns.

In a second advantageous embodiment, the system server is a documentation server of the automation system storing information such as operating manuals or spare part listings about the IED, and the server request data including an IED identifier is provided automatically by the IED application.

In a third advantageous embodiment, the server request data includes sensor data provided by a sensor of, or coupled to, the mobile HMI device. The sensor data may include a temperature reading, audio signal, video signal, location or proximity information provided by a temperature sensor, microphone, camera, GPS or proximity module, respectively. The sensor data may relate to ambient conditions at, or near, the mobile HMI device, or provide information about the IED or about the primary system other than the IED source data transmitted over the wireless communication channel. For instance, the sensor data may comprise a picture of a piece of primary equipment. The system server is configured to evaluate, or diagnose, the sensor data and transmit server response data in response there to.

In a further preferred variant of the invention the automation system comprises a plurality of IEDs that are adapted to be selected for data exchange with the mobile HMI device by accepting a local activation, by the human, of the first communication channel. Selection may occur via an IED menu on-off setting, a DIP (Dual In-line Package) switch setting, or selective Bluetooth antenna connection at the target IED. Alternatively, a directional infrared link, or a proximity identification by means of an optical bar code reader or Near-Field Communication (NFC) may be used to provide IED selectivity. On the other hand, permanently wiring a plurality of IEDs to a single WLAN access point for accessing the first wireless communication channel requires more complex IED selectivity mechanisms involving both the WLAN access point and the mobile HMI device.

The present invention also relates to a computer program product including computer program code for controlling one or more processors of a mobile HMI device adapted to communicate, via wireless communication channels, with an IED and with a system server, particularly, a computer program product including a computer readable medium containing therein the computer program code.

### DETAILED DESCRIPTION OF PREFERRED EMBODIMENTS

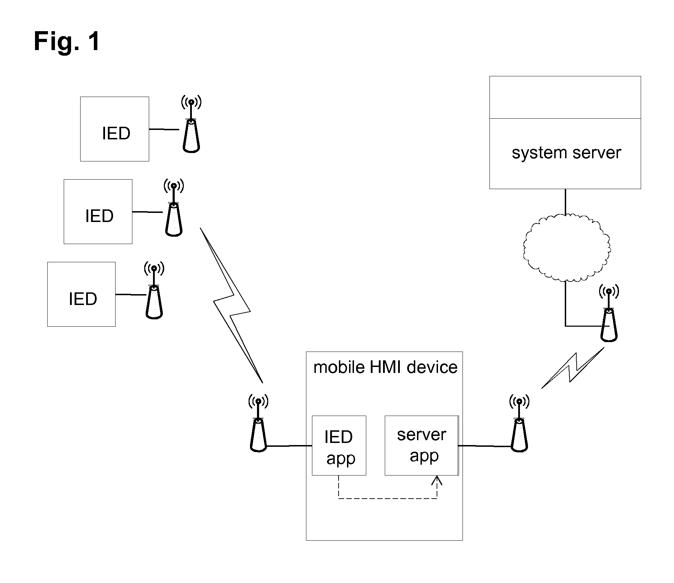

Fig.1 schematically shows an exemplary automation system with three Intelligent Electronic Devices IEDs, a mobile HMI device, a system server and two wireless communication channels interconnecting the mobile HMI device and the IEDs or the system server, respectively. On the mobile HMI device, an IED or engineering application is instantiated and handles the IED data, whereas a server application handles server data from the system server. Information flow from the IED application to the server application is enabled without limitation (broken line).

The following paragraphs disclose aspects of the invention.

An automation system includes a mobile device (e.g. smartphone) and one or multiple automation devices (e.g. substation automation IEDs) and a wireless communication infrastructure between them (e.g. NFC, Bluetooth, WLAN,...) and an IED application ("engineering app") displayed on the mobile device, which allows to read and edit information on the IED. The mobile device has a communication channel to the automation device. The mobile device has an additional communication channel, which allows other applications running on the device to talk to a system, or second, server (or more additional servers at the same time). The application or applications on the mobile device strictly separate information flows thus that no unauthorized information can flow between the two channels.

The second server is a documentation server that provides manuals and similar documents to the user. The manuals presented and the sections/information shown is synchronized with the tasks the user executes on the engineering app.

The second server is a remote collaboration tool that allows sensing, screen sharing, written, visual, and/or oral real-time communication between the user of the mobile application and a remote user, e.g. a service expert.

The second server is an interactive troubleshooting/diagnosis application, which guides the user and can also read device status information and run diagnosis algorithms on the remote backend of the second server.

The second server is an archiving/historian application that is able to playback earlier datapoints, settings, configurations, or disturbance reports.

The server application and / or second server make use of data generated by sensors in or attached to the mobile device (e.g. sound analysis, image recognition, video analysis, vibration sensors, infrared thermal imaging). The data generated and / or other information collected (GPS) is used to localise the technician and guide her towards the IED to be serviced.

The IED application contains client side functionality to authenticate the user to the device, e.g. a client certificate, a password entry facility, or biometric sensors (fingerprint, camera, voice).

A communication channel between the mobile device and the automation device is partially short range wireless (e.g. WLAN, Bluetooth, NFC, IEEE 802.15.4) and the other communication channel between the mobile device and the second server runs partially over the mobile telecommunication channels (GSM, EDGE, GPRS). Both communication channels run initially over the same WLAN infrastructure, but as separate tunnels/virtual networks with separate endpoints in the automation device and the second server.

The second server is used to remotely process the technician's vocal input in order to give speech recognition capabilities to the mobile device, so that it can be used in a hands-free fashion.

The second server is used to store different configurations for different IEDs. The configurations can then be selected from it and remotely uploaded to the mobile device, which can then in turn upload one of them to the controlled IED.

The mobile device is used to notify the technician about specific events (e.g. breaker opening) happening at the remote IED. In case a single mobile device is connected to multiple IEDs, the technician is notified about events happening on all of IEDs, in a publish/subscribe fashion.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. An automation system comprising
- an Intelligent Electronic Device IED adapted to exchange IED data via a first wireless communication channel,
- a system server adapted to exchange server data via a second wireless communication channel,
- a mobile Human Machine Interface HMI device adapted to communicate, via the first and second wireless communication channel, with the IED and with the system server, respectively, and running an IED application configured to display IED source data and accept IED destination data, and running a server application configured to display server data.

2. The system of claim 1, wherein the server application is configured to accept server request data and to display server response data responsive to the server request data.

3. The system of claim 2, wherein the server response data is prohibited from being provided automatically to the IED application.

4. The system of claim 2, wherein the system server is a documentation server of the automation system, and wherein the server request data is provided by the IED application.

5. The system of claim 2, wherein the server request data includes sensor data provided by a sensor coupled to the mobile HMI device, and wherein the system server is configured to analyse the sensor data and transmit server response data in response there to.

6. The system of any of claims 1 to 5 comprising a plurality of IEDs adapted to be selected for data exchange with the mobile HMI device by accepting a local activation, by a human, of the first communication channel.

7. The system of any of claims 1 to 5, wherein the system server is running a service application configured to accept input from a human as the server response data.

8. The system of any of claims 1 to 5, wherein the IED is devoid of a display unit.
